# EUROPEAN PATENT SPECIFICATION

(11) **EP 2 401 191 B1**
(45) Date of publication and mention of the grant of the patent: **10.04.2013**
(21) Application number: 09779100.8
(22) Date of filing: 27.02.2009
(51) Int. Cl.: B62D 25/04, B62D 29/00

(54) **STRUCTURAL REINFORCEMENT SYSTEM**
STRUKTURELLE VERSTÄRKUNGSSYSTEM
SYSTÈME DE RENFORCEMENT STRUCTURAL

(43) Date of publication of application: 04.01.2012
(73) Proprietor: Sika Technology AG, 6340 Baar (CH)
(72) Inventor: KRAUSHAAR, Thomas, 8037 Zürich (CH)
(74) Representative: Sika Patent Attorneys
(86) International application number: PCT/EP2009/052376
(87) International publication number: WO 2010/097120

(56) References cited:
- EP-A- 1 122 152
- WO-A-03/000535
- WO-A-03/020574
- WO-A-2007/098464

## Description

### BACKGROUND

Cars, trucks, boats, trains, and planes often include frames with hollow cavities. Hollow cavities are often created in these products to reduce overall weight of the product, as well as to reduce material costs. However, introducing hollow cavities into a frame may reduce the overall strength of the frame, and may also increase noise and vibration in other parts of the vehicle.

To alleviate these, as well as other negative effects, hollow cavities often include reinforcements, including various expandable materials. Such reinforcements can decrease noise and vibration while increasing the structural stiffness of the product, thereby allowing for significant weight and material cost reductions. Some current reinforcement systems include expandable foam applied to a rigid carrier. The foam expands during the manufacturing process, securing the rigid carrier in place as the foam contacts the walls of the hollow cavity. WO 2003/020574 and and 2007/098464 disclose, in accordance with the preamble features of in dependent claim 1 structural reinforcement systems with two carriers. An expandable material arranged in-between the carriers will push the carriers away from each other and the exterior surface of the carriers onto interior walls of the cavity if the expandable material is expanded. An adhesive may be arranged at the surface of the carriers.

Reinforcement systems can provide additional structural reinforcement, as well as other benefits, through the use of novel shapes, materials, and configurations.

### SUMMARY OF THE INVENTION

According, the object of the invention is to provide a better structural reinforcement system.

According to the invention, this is achieved by the features of the independent claims.

The advantages of the invention can be seen, inter alia, in the fact that the adhesive is moved from a stored position to a bonding position when the expandable material expands. Further advantageous embodiments of the invention emerge from the sub claims.

### BRIEF DESCRIPTION OF THE DRAWINGS

Figure 1 is a perspective view of an automobile frame having multiple cavities.

Figure 2 is a perspective view of a structural reinforcement system in a horizontal cavity of a structural body before activation.

Figure 3 is a cut-away side view of a structural reinforcement system in a horizontal cavity of a structural body before activation.

Figure 4 is a cut-away side view of a structural reinforcement system in a horizontal cavity of a structural body after activation.

Figure 5 is a cut-away side view of another structural reinforcement system in a horizontal cavity of a structural body before activation.

Figure 6 is a cut-away side view of another structural reinforcement system in a horizontal cavity of a structural body after activation.

### DETAILED DESCRIPTION

Disclosed are various embodiments of a structural reinforcement system. The system reinforces hollow cavities within various products to increase the structural rigidity of the product. The system generally includes a rigid carrier, an expandable material, and an adhesive. The rigid carrier provides the primary structural reinforcement within the cavity, and also serves as a substrate to carry the expandable material and the adhesive. The expandable material is placed within the carrier, and the adhesive is placed on top of the expandable material. The system is configured such that when the expandable material expands, the adhesive will be pushed against the cavity walls and bond to both the rigid carrier and the cavity walls.

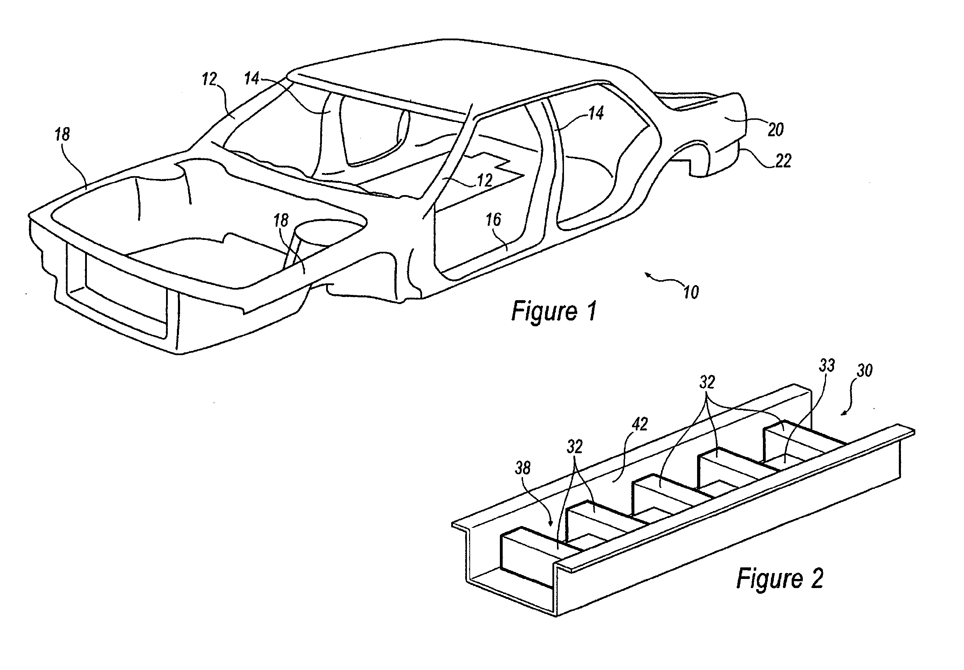

Figure 1 illustrates a vehicle frame 10 that includes many cavities that can be reinforced using the disclosed structural reinforcement system. Such cavities can be any size, shape, or orientation, and can be formed from any material, including various metals, composites, and/or plastics. For example, potentially reinforceable cavities within vehicle frame 10 can be found within various parts of the frame, including A-pillars 12, B-pillars 14, a rocker 16, frame rails 18, a fuel tank sealer 20, and a bumper 22. Generally, the structural rigidity of vehicle frame 10 can be greatly enhanced by reinforcing such hollow cavities within vehicle frame 10. Of course, the disclosed structural reinforcement system can also be used in various body panels, doors, and other vehicle components, and is not limited to hollow cavities within a vehicle frame.

Figures 2, 3, and 4 depict one embodiment of a structural reinforcement system 30 for reinforcing a cavity 40 within vehicle frame 10. Cavity 40 can be any cavity within vehicle frame 10 and generally includes at least one interior cavity wall 44. Generally, system 30 will be designed for a specific cavity 40, such as within A-pillars 12, but system 30 can also be designed generically to fit cavities of differing dimensions. System 30 may be designed to fit a portion of cavity 40, or may be designed to fit or fill an entire cavity 40. System 30 is typically placed within a cavity and generally includes a rigid carrier 32, an expanding material 34, and an adhesive 36.

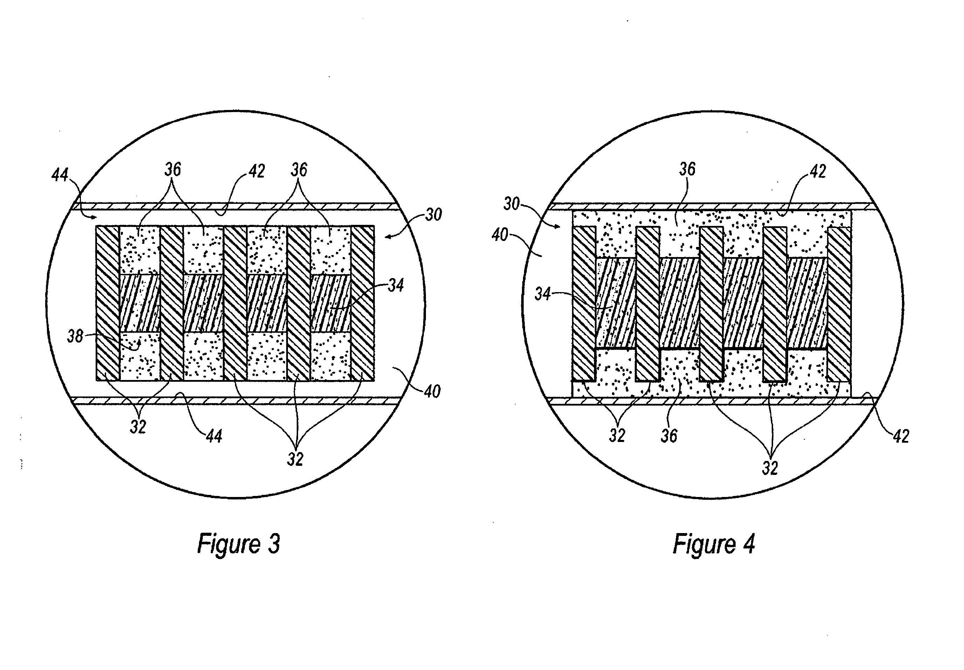

Carrier 32 is usually a rigid structure that provides structural reinforcement within cavity 40, and provides a base or substrate for expanding material 34 and adhesive 36. Carrier 32 can be formed of a singular material, or it can be formed as separate components that are fastened together. Carrier 32 can be made from any number of different materials, including various metals, plastics, composites, and the like, including various polyamides. Of course, the particular material or materials may also depend on the particular application. Carrier 32 can be formed in a variety of shapes and configurations, including portions that are cylindrical, rectangular, contoured, angled, bent, curved, and/or flat, including any number of shape combinations designed to fit within cavity 40. As shown in Figures 2, 3, and 4, carrier 32 includes a plurality of ribs that are evenly spaced apart, and typically connected by one or more perpendicular walls. For example, as shown in Figure 2, carrier 32 includes a plurality of ribs and substantially perpendicular connecting wall 33 that connects the ribs. Of course, carrier 32 may be configured to include any number of ribs and connecting walls 33. For example, carrier 32 may include a connecting wall 33 that is disposed on an external face of the ribs. Generally, each rib includes exposed vertical faces, and exposed horizontal faces positioned in close proximity to cavity walls 42. As shown in Figure 3, the exposed faces of each rib generally provide a bonding surface for adhesive 36, as will be discussed in more detail below.

Carrier 32 can include various chemical or mechanical fasteners that hold system 30 in place within cavity 40. Carrier 32 can be initially placed or fixed in cavity 40 using any number of different methods or materials, including using a chemical bonding agent, a mechanical fastener, and/or an adhesive, including adhesive 36. For example, carrier 32 may be fixed in place using one or more dips, or some other mechanical fastener. Alternatively, carrier 32 may have leg supports (not shown) to retain carrier 32 in cavity 40 without using any mechanical or chemical fastener. Furthermore, cavity 40 may include various features, including brackets, legs, ledges, etc., to maintain system 30 in a particular location and/or orientation. Notably, carrier 32 holds expanding material 34 and adhesive 36 in place within cavity 40.

Carrier 32 typically holds expanding material 34 and adhesive 36 in a holding area 38. Expanding material 34 and adhesive 36 can be held in holding area 38 using any available method, including chemical or mechanical fasteners, such as glue, adhesives, or mechanical clips. Carrier 32 generally includes at least one holding area 38 to accommodate expanding material 34 and adhesive 32. As shown in Figures 2, 3, and 4, carrier 32 includes multiple vertically-oriented holding areas 38 that are periodically spaced throughout carrier 32.

As shown in Figure 3, system 30 is configured such that expanding material 34 is substantially covered by adhesive 36. Put another way, expanding material 34 provides an inner core or interior layer, while adhesive 36 provides an outer layer. Typically, the two layers, expanding material 34 and adhesive 36, are configured to maintain a pre-expansion gap 44 between system 30 and walls 42 before activation. Providing pre-expansion gap 44 allows a manufacturer to apply liquid coatings to walls 42 within cavity 40, and also allows for greater assembly tolerances.

Generally, system 30 is configured such that when expanding material 34 is activated, adhesive 36 is pushed out of holding area 38, and into contact with cavity walls 42. During the activation process, both expanding material 34 and adhesive 36 change from a solid or formable dough phase to a liquid or substantially liquid phase. Expanding material 34 expands, thereby forcing adhesive 36 to flow out of holding area 38 and into contact with walls 42 and the exterior of carrier 32, substantially filling pre-expansion gap 44. After the activation process, adhesive 36 cures and transitions into a substantially solid phase, and has a strength sufficient to reinforce cavity 40. Since adhesive 36 bonds directly to cavity walls 42 and to carrier 32, expanding material 34 generally only serves to push the adhesive into position and does not necessarily serve as an internal structural reinforcement. Therefore, system 30 does not necessarily rely on expandable material 34 to provide internal structural reinforcement within cavity 40, but instead can rely on carrier 32 being bonded directly to cavity walls 42 by adhesive 36.

Figure 3 illustrates system 30 within cavity 40 before activating expanding material 34 or adhesive 36. Before activation, expanding material 34 rests in an unexpanded state, occupying a space within carrier 32, such as within holding area 38. Generally, system 30 will be placed in cavity 40 within vehicle frame 10 during an early stage of the vehicle manufacturing process. At a later stage, vehicle frame 10 will undergo a heat treatment or baking process, such as during a painting process. Generally, expanding material 34 and adhesive 36 are materials that are heat activated, and as such, remain in an unactivated state until heat is applied. When expanding material 34 and adhesive 36 are activated by heat, adhesive 36 may have a lower melting or activation temperature so that it changes to a substantially liquid phase before expanding material 34 begins to expand. Alternatively, both expandable material 34 and adhesive 36 may have activation temperatures that are relatively close. Alternatively, expanding material 34 may have a lower activation temperature than adhesive 36, such that expanding material begins to expand before adhesive 36 changes to a substantially liquid phase. While activation generally occurs by applying heat, system 30 could also be activated through various other electrical or chemical processes, including using microwaves, ultrasonic waves, radiation, electric current, chemical reactions, etc. The proper activation method may depend on several factors, including the type of materials used for expanding material 34 and adhesive 36.

Figure 4 illustrates system 30 within cavity 40 after undergoing an activation process. Following the activation process, expandable material 34 and adhesive 36 cure, transforming into a solid or a thermoset phase. As shown in Figure 4, adhesive 36 bonds carrier 32 to walls 42, substantially filling pre-expansion gap 44. Expanding material 34, on the other hand, remains substantially within the confines of holding area 38 and does not contact walls 42 of cavity 40. Such a configuration provides a superior reinforcement system because many traditional adhesives can provide greater mechanical strength or stiffness than traditional structural foams. Unlike traditional reinforcement systems, system 30 does not rely on expanding material 34 to provide structural reinforcement within cavity 40. On the contrary, structural reinforcement is provided primarily by carrier 32, and secondarily by adhesive 36. As such, system 30 may be configured in any number of ways to ensure that expanding material 34 pushes adhesive 36 out and against walls 42 within cavity 40, and the disclosed embodiments are merely examples of several such configurations.

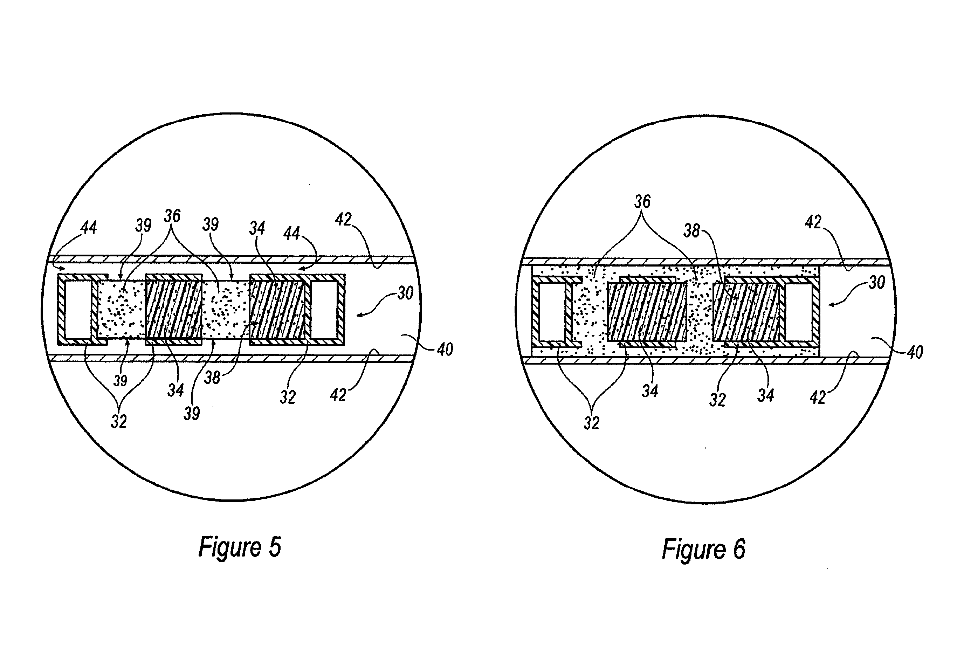

Figures 5 and 6 illustrate yet another configuration of a structural reinforcement system 30. As shown, carrier 32 includes a horizontally-oriented holding area 38 that includes periodic openings 39. As shown in Figures 5 and 6, carrier 32 can include an elongated rigid body that includes periodic openings 39. Expandable material 34 is placed in-between openings 39, and adhesive 36 is placed in-between blocks of expandable material 34. As shown in Figure 6, expandable material 34 expands horizontally during activation, forcing adhesive 36 out through openings 39. Adhesive 36 then substantially fills pre-expansion gap 44 and bonds cavity walls 42 to carrier 32.

Expandable material 34 may be any material that expands during an activation process, including structural foams and non-structural foams. For example, expandable material 34 can be a non-structural expandable foam, such as SikaBaffle sold by Sika Corporation of Madison Heights, Mich. SikaBaffle is described in U.S. Pat. Nos. 5,266,133 and 5,373,027 to Hanley et al., the disclosures of which are incorporated herein by reference. Alternatively, if greater reinforcing properties are desired with less expansion, expandable material 34 could be a reinforcing material or structural foam, such as that sold by Sika Corporation as SikaReinforcer. A series of these thermally expandable materials, owned by the Sika Corporation, are described in U.S. Pat. No. 6,387,470, which is hereby incorporated herein by reference in its entirety. Expandable material 34 could also be other thermally expandable materials, such as SikaFoam sold by Sika Corporation. Furthermore, expandable material 34 may be activated by an external heat source, or be internally activated by an exothermic reaction. Further, expandable material 34 may be activated by some other process, including using electric current, microwaves, ultrasonic waves, radiation, etc. Generally, the activation process used by expandable material 34 will be the same activation process used by adhesive 36, although the two could conceivably use different activation processes.

Adhesive 36 is generally a thermoset, one-component epoxy resin formulation that is a solid or a formable dough before activation. Suitable liquid epoxy resins include bisphenol-A epoxy resins such as the DER liquid epoxy resins that are commercially available through the Dow Chemical Co. in Midland Michigan, and the EPON liquid epoxy resins that are commercially available through Resolution Performance Products in Houston, Texas. Adhesive 36 could also be SikaPower sold by the Sika Corporation. Adhesive 36 could be any other thermoset so long as the thermoset changes phases and bonds carrier 32 to walls 42. Further, adhesive 36 could be any other suitable bonding agent that can undergo an activation process as discussed above.

Expandable material 34 and adhesive 36 may also include various additives. Suitable additives include pigments, coloring agents, flame retardants, diluents, coupling agents, flexibilizers, chemical blowing agents, physical blowing agents, trace amount of cure accelerators, dispersants, wetting agents, defoaming agents, antioxidants, ultraviolet absorbers, photostabilizers such as HALS, and reinforcing agents such as rubber particles, and the like.

While the present invention has been particularly shown and described with reference to the foregoing preferred and alternative embodiments, it should be understood by those skilled in the art that various alternatives to the embodiments of the invention described herein may be employed in practicing the invention without departing from the spirit and scope of the invention as defined in the following claims. It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. The foregoing embodiments are illustrative, and no single feature or element is essential to all possible combinations that may be claimed in this or a later application.

## Claims

1. A structural reinforcement system (30), comprising:
a rigid carrier (32), the carrier (32) is configured to fit within a cavity (40) within a vehicle frame (10);
an expandable material (34);
an adhesive (36);
and **characterized in that** the expandable material (34) is disposed adjacent to the rigid carrier (32) and the adhesive (36), the adhesive (36) is placed on top of the expandable material (34), the expandable material (34) and the adhesive (36) are disposed such that the expandable material (34) causes the adhesive (36) to move away from the carrier and into contact with an exterior surface of the carrier (32) and an interior wall of the cavity (40) to bond both the rigid carrier (32) and the wall of the cavity (40), when the expandable material (34) expands.

2. The structural reinforcement system (30) of claim 1, wherein the rigid carrier (32) includes a holding area (38) that is defined by a plurality of ribs.

3. The structural reinforcement system (30) of one of the preceding claims, wherein the rigid carrier (32) includes an elongated substantially hollow body having a plurality of openings thereby defining at least one holding area (38).

4. The structural reinforcement system (30) of one of the preceding claims, wherein the expandable material (34) is one of a structural foam and a non-structural foam, and the adhesive (36) is a thermoset epoxy resin.

5. The structural reinforcement system (30) of one of the preceding claims, wherein the expandable material (34) and the adhesive (36) are substantially disposed within a holding area (38) within the rigid carrier (32).

6. The structural reinforcement system (30) of one of the preceding claims, wherein the expandable material (34) and the adhesive (36) are activated by at least one activation process selected from a group comprising: heat, electric current, microwaves, ultrasonic waves, and radiation.

7. The structural reinforcement system (30) of one of the preceding claims, wherein the expandable material (34) expands during an activation process, thereby pushing the adhesive (36) away from a holding area (38) within the rigid carrier (32).

8. A method of reinforcing a cavity (40), comprising:
forming a rigid carrier (32), wherein the rigid carrier (32) is formed to fit within a portion of a cavity (40) within a vehicle frame (10);
attaching an expandable material (34) to the carrier (32); and
attaching an adhesive (36) to the carrier (32), wherein the adhesive (36) is placed on top of the expandable material (34), the expandable material (34) and the adhesive (36) are configured so as to move the adhesive (36) from a stored position to a bonding position to bond both the rigid carrier (32) and the wall of the cavity (40), when the expandable material (34) expands.

9. The method of claim 8, further comprising forming the rigid carrier (32) to include a holding area (38) that is defined by a plurality of ribs.

10. The method of one of the claims 8 to 9, further comprising forming the rigid carrier (32) to include an elongated substantially hollow body having a plurality of openings thereby defining at least one holding area (38).

11. The method of one of the claims 8 to 10, wherein the expandable material (34) is one of a structural foam and a non-structural foam, and the adhesive (36) is a thermoset epoxy resin.

12. The method of one of the claims 8 to 11, further comprising substantially disposing the adhesive (36) and the expandable material (34) within a holding area (38) within the rigid carrier (32).

13. The method of one of the claims 8 to 12, wherein the expandable material (34) and the adhesive (36) are activated by at least one activation process selected from a group comprising: heat, electric current, microwaves, ultrasonic waves, and radiation.

14. The method of one of the claims 8 to 13, further comprising configuring the carrier (32), the expandable material (34), and the adhesive (36) to maintain a pre-expansion gap between the carrier (32) and a cavity wall (42) within a vehicle frame (10) before activation.

15. The method of one of the claims 8 to 14, further comprising modifying the carrier (32) to include at least one opening (39), herein the opening (39) is configured to control the flow the adhesive (36), thereby directing the adhesive (36) to contact an exterior face of the carrier (32) when the expandable material (34) expands.

## Patentansprüche

1. Strukturverstärkungssystem (30), enthaltend:
einen starren Träger (32), welcher Träger (32) so konfiguriert ist, dass er in einen Hohlraum (40) innerhalb eines Fahrzeugrahmens (10) passt;
ein expandierbares Material (34);
einen Klebstoff (36);
und **dadurch gekennzeichnet, dass** das expandierbare Material (34) dem starren Träger (32) und dem Klebstoff (36) benachbart angeordnet ist, wobei der Klebstoff (36) oben auf dem expandierbaren Material (34) angeordnet ist, das expandierbare Material (34) und der Klebstoff (36) so angeordnet sind, dass das expandierbare Material (34) den Klebstoff (36) veranlasst, sich vom Träger weg und in Kontakt mit einer Außenfläche des Trägers (32) und einer Innenwand des Hohlraums (40) zu bewegen, so dass es sich sowohl mit dem starren Träger (32) als auch mit der Wand des Hohlraums (40) verbindet, wenn sich das expandierbare Material (34) ausdehnt.

2. Strukturverstärkungssystem (30) gemäß Anspruch 1, wobei der starre Träger (32) einen Aufnahmebereich (38) einschließt, der durch eine Vielzahl von Rippen definiert ist.

3. Strukturverstärkungssystem (30) gemäß einem der vorhergehenden Ansprüche, wobei der starre Träger (32) einen länglichen, im Wesentlichen hohlen Körper einschließt, welcher eine Vielzahl von Öffnungen aufweist und dadurch mindestens einen Aufnahmebereich (38) definiert.

4. Strukturverstärkungssystem (30) gemäß einem der vorhergehenden Ansprüche, wobei das expandierbare Material (34) entweder ein Strukturschaum oder ein Nicht-Strukturschaum ist und der Klebstoff (36) ein warmhärtendes Epoxidharz ist.

5. Strukturverstärkungssystem (30) gemäß einem der vorhergehenden Ansprüche, wobei das expandierbare Material (34) und der Klebstoff (36) im Wesentlichen innerhalb eines Aufnahmebereichs (38) innerhalb des starren Trägers (32) angeordnet sind.

6. Strukturverstärkungssystem (30) gemäß einem der vorhergehenden Ansprüche, wobei das expandierbare Material (34) und der Klebstoff (36) durch mindestens einen Aktivierungsprozess aktiviert werden, der ausgewählt ist aus einer Gruppe, die folgendes umfasst: Wärme, elektrischen Strom, Mikrowellen, Ultraschallwellen und Strahlung.

7. Strukturverstärkungssystem (30) gemäß einem der vorhergehenden Ansprüche, wobei sich das expandierbare Material (34) während eines Aktivierungsprozesses ausdehnt und dabei den Klebstoff (36) von einem Aufnahmebereich (38) innerhalb des starren Trägers (32) wegdrückt.

8. Verfahren zur Verstärkung eines Hohlraums (40), enthaltend:
Bilden eines starren Trägers (32), wobei der starre Träger (32) so geformt ist, dass er in einen Teil eines Hohlraums (40) innerhalb eines Fahrzeugrahmens (10) passt;
Anbringen eines expandierbaren Materials (34) an dem Träger (32); und
Anbringen eines Klebstoffs (36) an dem Träger (32), wobei der Klebstoff (36) auf die Oberseite des expandierbaren Materials (34) aufgebracht wird, das expandierbare Material (34) und der Klebstoff (36) so konfiguriert sind, dass sie den Klebstoff (36) von einer Lagerposition in eine Verbindungsposition bewegen, um sowohl den starren Träger (32) als auch die Wand des Hohlraums (40) zu verbinden, wenn sich das expandierbare Material (34) ausdehnt.

9. Verfahren gemäß Anspruch 8, ferner enthaltend das Formen des starren Trägers (32) dergestalt, dass er einen Aufnahmebereich (38) aufweist, der durch eine Vielzahl von Rippen definiert ist.

10. Verfahren gemäß einem der Ansprüche 8 bis 9, ferner enthaltend das Formen des starren Trägers (32) dergestalt, dass er einen länglichen, im Wesentlichen hohlen Körper mit einer Vielzahl von Öffnungen einschließt und dadurch mindestens einen Aufnahmebereich (38) definiert.

11. Verfahren gemäß einem der Ansprüche 8 bis 10, wobei das expandierbare Material (34) entweder ein Strukturschaum oder ein Nicht-Strukturschaum ist und der Klebstoff (36) ein warmhärtendes Epoxidharz ist.

12. Verfahren gemäß einem der Ansprüche 8 bis 11, welches ferner im Wesentlichen das Anordnen des Klebstoffs (36) und des expandierbaren Materials (34) innerhalb eines Aufnahmebereichs (36) innerhalb des starren Trägers (32) enthält.

13. Verfahren gemäß einem der Ansprüche 8 bis 12, wobei das expandierbare Material (34) und der Klebstoff (36) durch mindestens einen Aktivierungsprozess aktiviert werden, der ausgewählt ist aus einer Gruppe, die folgendes umfasst: Wärme, elektrischen Strom, Mikrowellen, Ultraschallwellen und Strahlung.

14. Verfahren gemäß einem der Ansprüche 8 bis 13, ferner enthaltend das Konfigurieren des Trägers (32), des expandierbaren Materials (34) und des Klebstoffs (36) dergestalt, dass eine Vorexpansionsfuge zwischen Träger (32) und einer Hohlraumwand (42) innerhalb eines Fahrzeugrahmens (10) vor der Aktivierung aufrechterhalten wird.

15. Verfahren gemäß einem der Ansprüche 8 bis 14, ferner enthaltend das Modifizieren des Trägers (32) dergestalt, dass er mindestens eine Öffnung (39) aufweist, wobei die Öffnung (39) für die Steuerung des Klebstoffflusses (36) konfiguriert ist, wodurch der Klebstoff (36) so geleitet wird, dass er eine Außenseite des Trägers (32) berührt, wenn sich das expandierbare Material (34) ausdehnt.

## Revendications

1. Système de renfort structurel (30), comprenant :
un support rigide (32), le support (32) est configuré pour s'ajuster dans une cavité (40) à l'intérieur d'un châssis de véhicule (10) ;
une matière expansible (34) ;
un adhésif (36) ;
et **caractérisé en ce que** la matière expansible (34) est disposée à côté du support rigide (32) et de l'adhésif (36), l'adhésif (36) est placé sur le dessus de la matière expansible (34), la matière expansible (34) et l'adhésif (36) sont disposés de sorte que la matière expansible (34) provoque l'éloignement de l'adhésif (36) par rapport au support et la mise en contact avec une surface extérieure du support (32) et une paroi intérieure de la cavité (40) pour lier à la fois le support rigide (32) et la paroi de la cavité (40), lorsque la matière expansible (34) se dilate.

2. Système de renfort structurel (30) selon la revendication 1, dans lequel le support rigide (32) inclut une zone de maintien (38) qui est définie par une pluralité de nervures.

3. Système de renfort structurel (30) selon l'une des revendications précédentes, dans lequel le support rigide (32) inclut un corps creux sensiblement allongé ayant une pluralité d'ouvertures définissant de ce fait au moines une zone de maintien (38).

4. Système de renfort structurel (30) selon l'une des revendications précédentes, dans lequel la matière expansible (34) est l'une d'une mousse structurelle et d'une mousse non structurelle, et l'adhésif (36) est une résine époxy thermodurcie.

5. Système de renfort structurel (30) selon l'une des revendications précédentes, dans lequel la matière expansible (34) et l'adhésif (36) sont sensiblement disposés à l'intérieur d'une zone de maintien (38) à l'intérieur du support rigide (32).

6. Système de renfort structurel (30) selon l'une des revendications précédentes, dans lequel la matière expansible (34) et l'adhésif (36) sont activés par au moins un processus d'activation sélectionné à partir d'un groupe comprenant : la chaleur, le courant électrique, les micro-ondes, les ondes ultrasoniques et le rayonnement.

7. Système de renfort structurel (30) selon l'une des revendications précédentes, dans lequel la matière expansible (34) se dilate pendant un processus d'activation, provoquant ainsi l'éloignement de l'adhésif (36) par rapport à une zone de maintien (38) à l'intérieur du support rigide (32).

8. Procédé de renfort d'une cavité (40), comprenant :
la formation d'un support rigide (32), dans lequel le support rigide (32) est formé pour s'ajuster à l'intérieur d'une partie d'une cavité (40) à l'intérieur d'un châssis de véhicule (10) ;
la fixation d'une matière expansible (34) au support (32) ; et
la fixation d'un adhésif (36) au support (32), dans lequel l'adhésif (36) est placé sur le dessus de la matière expansible (34), la matière expansible (34) et l'adhésif (36) sont configurés de façon à déplacer l'adhésif (36) d'une position de rangement à une position de liaison pour lier à la fois le support rigide (32) et la paroi de la cavité (40), lorsque la matière expansible (34) se dilate.

9. Procédé selon la revendication 8, comprenant en outre la formation du support rigide (32) pour inclure une zone de maintien (38) qui est définie par une pluralité de nervures.

10. Procédé selon l'une des revendications 8 à 9, comprenant en outre la formation du support rigide (32) pour inclure un corps creux sensiblement allongé ayant une pluralité d'ouvertures définissant de ce fait au moins une zone de maintien (38).

11. Procédé selon l'une des revendications 8 à 10, dans lequel la matière expansible (34) est l'une d'une mousse structurelle et d'une mousse non structurelle, et l'adhésif (36) est une résine époxy thermodurcie.

12. Procédé selon l'une des revendications 8 à 11, comprenant en outre sensiblement la disposition de l'adhésif (36) et de la matière expansible (34) à l'intérieur d'une zone de maintien (38) à l'intérieur du support rigide (32).

13. Procédé selon l'une des revendications 8 à 12, dans lequel la matière expansible (34) et l'adhésif (36) sont activés par au moins un processus d'activation sélectionné à partir d'un groupe comprenant : la chaleur, le courant électrique, les micro-ondes, les ondes ultrasoniques et le rayonnement.

14. Procédé selon l'une des revendications 8 à 13, comprenant en outre la configuration du support (32), de la matière expansible (34) et de l'adhésif (36) pour maintenir un espace de pré-dilatation entre le support (32) et une paroi de cavité (42) à l'intérieur d'un châssis de véhicule (10) avant activation.

15. Procédé selon l'une des revendications 8 à 14, comprenant en outre la modification du support (32) pour inclure au moins une ouverture (39), dans lequel l'ouverture (39) est configurée pour commander le flux de l'adhésif (36), dirigeant de ce fait l'adhésif (36) pour le faire entrer en contact avec une face extérieure du support (32) lorsque la matière expansible (34) se dilate.
